# EUROPEAN PATENT SPECIFICATION

(11) **EP 1 289 746 B1**
(45) Date of publication and mention of the grant of the patent: **22.03.2006**
(21) Application number: 00972237.2
(22) Date of filing: 17.10.2000
(51) Int. Cl.: B32B 3/30, B41M 7/00

(54) **SECURE LAMINATE CONSTRUCTION WITH EMBOSSED IMAGE RECEIVING SURFACE**
SICHERER SCHICHTKÖRPER MIT GEPRÄGTER BILDEMPFANGSOBERFLÄCHE
FABRICATION DE STRATIFIE DE SECURITE A SURFACE DE RECEPTION D' IMAGE GAUFREE

(30) Priority: 09.06.2000 US 591624
(43) Date of publication of application: 12.03.2003
(60) Divisional application: 06001650.8
(73) Proprietor: 3M Innovative Properties Company, St. Paul, MN 55133-3427 (US)
(72) Inventor: ENGLE, Lori, P., Saint Paul, MN 55133-3427 (US); GRAHAM, Paul, D., Saint Paul, MN 55133-3427 (US); SCHULZ, Mark, F., Saint Paul, MN 55133-3427 (US)
(74) Representative: Vossius & Partner
(86) International application number: PCT/US2000/028719
(87) International publication number: WO 2001/096099

(56) References cited:
- EP-A- 0 832 756
- WO-A-99/55537
- US-A- 5 681 660

## Description

### Field of Invention

The present invention relates generally to image retaining laminates. More particularly, the present invention relates to imaged security laminates for such things as identification cards.

### Background of the Invention

A laminate in accordance with the present invention may be utilized for such things as identification cards. Identification cards and related products have been used for many years as a means for persons to establish their identity and credentials. Examples of identification cards include customer loyalty cards, corporate identification cards, and drivers licenses. These identification cards may include a number of images.

One popular method of imaging identification cards has been through the use of a printing process known as diffusion dye thermal transfer (D2T2). In this printing process, heat is utilized to cause a colored dye to migrate into a layer of the card construction. This process is described in commonly assigned U.S. Patent No. 5,688,738 entitled Security Card and Method for Making Same. Despite its obvious utility, the D2T2 imaging process is a relatively expensive one, both in the cost associated with the equipment to perform this process, and the cost associated in the required printing ribbons. In addition, only a small fraction of the dyes contained on the D2T2 printing ribbon is transferred to a card, with the remainder of the dyes on the printer ribbon thus being waste.

With the advent of low cost, high quality inkjet printers, there has been some interest in ink-jet printing security cards. Although the cost of imaging such a card may be much less than with D2T2 printing, inkjet printing presents other difficulties. For example, aqueous inks of the type often used in office environments typically consist of a small fraction of colorant (e.g., 4% - 8%) dissolved in a mixture of water and a humectant (e.g., diethylene glycol (DEG)). This excess water and humectant when printed on a card substrate or the ink receiving coating which is applied to the card substrate can reduce or prevent bonding between layers of the card, which in turn can lead to problems with delamination or tampering. Although other inks such as UV curable or solvent borne inks are available, they are not always suitable for use in an office environment where many identification cards are prepared.

### Summary of Invention

An image retaining laminate is disclosed. An image retaining laminate in accordance with the present invention comprises a sheet having a first surface and one or more projections extending beyond the first surface. The sheet also includes a second surface defined by the projections. An image receptive material is preferably disposed primarily on the first surface of the sheet between the projections. A second sheet is disposed over the second surface of the sheet after printing.

An image retaining laminate in accordance with the present invention may be used to fabricate, for example, identification cards, driver's licenses, passports, promotional signs, and the like. In a preferred embodiment, the image receptive material is adapted to receive an image comprised of aqueous ink. In a particularly preferred embodiment, the image receptive material is adapted to receive an image comprised of aqueous ink adapted for use in an inkjet printer. A printed image in accordance with the present invention preferably includes one or more security indicia. Examples of security indicia which may be suitable in some applications include, a picture of a human face, a representation of a human fingerprint, a bar code and a representation of a cardholder's signature.

An image retaining laminate in accordance with the present invention exhibits desirable anti-tampering characteristics. In particular, it is extremely difficult to separate the first sheet from the second sheet after bonding. Attempts to separate the second sheet from the first sheet frequently result in damage to the second sheet and/or the first sheet. In addition, attempts to separate the second sheet from the first sheet frequently result in the printed image being distorted and/or destroyed. For example, during delamination, the image receptive material may stretch, distorting the image.

One method of forming an image retaining sheet in accordance with the present invention may begin with the step of providing a substrate comprising a first surface and one or more projections extending beyond the first surface. Pressure and/or heat may be applied to a distal end of each projection. In a preferred method, a region of each projection proximate the distal end of each projection may be generally enlarged through the application of pressure and/or heat. A layer of image receptive material may also be deposited on the first surface of the substrate.

### Brief Description of the Drawings

Figure 1 is a plan view of a sheet in accordance with an additional exemplary embodiment ;
Figure 2 is a cross sectional view of a sheet in accordance with an additional exemplary embodiment;
Figure 3 is a plan view of a micro-embossed sheet in accordance with an exemplary embodiment;
Figure 4 is a cross sectional view of an assembly in including the embossed sheet of Figure 3 in accordance with an exemplary embodiment;
Figure 5 is a cross sectional view of multi-layer structure including the embossed sheet of Figures 3 and 4;
Figure 6 is a cross sectional view of an assembly including a nucro-embossed sheet in accordance with an exemplary embodiment;
Figure 7 is a cross sectional view of a laminate multi-layer structure in accordance with an exemplary embodiment;
Figure 8 is a cross sectional view of a multi-layer structure in accordance with an exemplary embodiment of the present invention;
Figure 9 is a cross sectional view of a multi-layer structure in accordance with an exemplary embodiment of the present invention;
Figure 10 is a cross sectional view of a micro-embossed sheet and a second sheet in accordance with an exemplary embodiment and
Figure 11 is a cross sectional view of a multi-layer structure including the embossed sheet of Figure 10.

### Detailed Description of the Preferred Embodiments

The following detailed description should be read with reference to the drawings, in which like elements in different drawings are numbered in like fashion. The drawings which are highly diagrammatic, depict selected embodiments, and are not intended to limit the scope of the invention. Examples of constructions, materials, dimensions, and manufacturing processes are provided for various elements. Those skilled in the art will recognize that many of the examples provided have suitable alternatives which may be utilized.

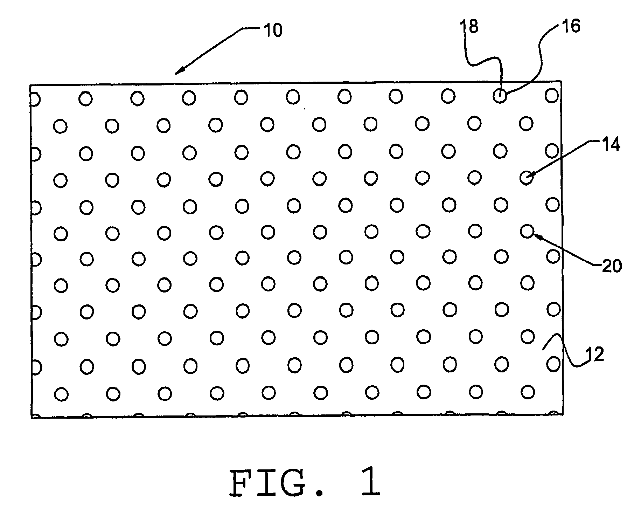

Figure 1 is a plan view of a sheet 10 Which is not an embodiment of the present invention Sheet 10 includes a first surface 12. A plurality of features 14 are disposed on first surface 12. In the embodiment of Figure 1, each feature 14 comprises a post 16 having a top 18. Tops 18 of posts 16 define a plane of a second surface 20.

Many embodiments of features 14 are possible. Examples of features which may be suitable in some applications include projections which generally protrude from a reference surface, cavities which are generally recessed relative to a reference surface, and particles such as beads which are preferably bondable to first surface 12. A "micro-embossed" or "microstructured" sheet in accordance with the present invention may have a topography in which the average pitch, that is, the center to center distance between features, is from about 1 to about 2000 micrometers and average peak to valley distances of individual features is from about 1 to about 200 micrometers.

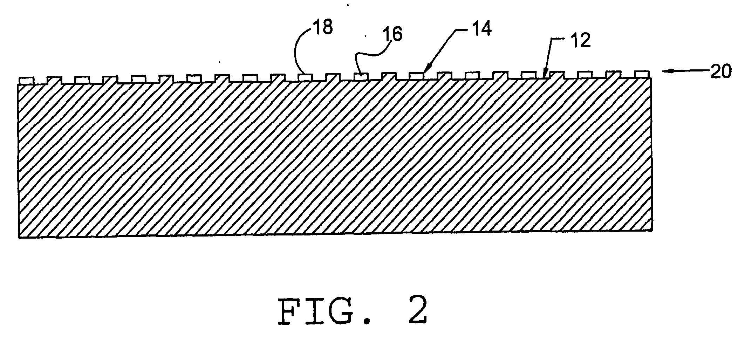

Figure 2 is a cross sectional view of sheet 10 of Figure 1. In a preferred embodiment, posts 16 have a diameter between about 1 and about 1000 micrometers. In a more preferred embodiment, posts 16 have a diameter between about 10 and about 500 micrometers. In a most preferred embodiment, posts 16 have a diameter between about 30 and about 200 micrometers.

In a preferred embodiment, posts 16, have a height from about 1 and about 500 micrometers. In an especially preferred embodiment, posts 16 have a height from about 5 and about 300 micrometers. In a more preferred embodiment, posts 16 have a height from about 10 and about 150 micrometers. In a most preferred embodiment, posts 16 have a height from about 15 and about 100 micrometers.

In a preferred embodiment, a ratio of the area of second surface 20 to the area of first surface 12 is from about 0.02 and about 10. In a more preferred embodiment, a ratio of the area of second surface 20 to the area of first surface 12 is from about 0.05 and about 3. In a most preferred embodiment, a ratio of the area of second surface 20 to the area of first surface 12 is from about 0.15 and about 1:

In a preferred embodiment, the posts have a micro-embossed element pitch (i.e., center to center distance between micro-embossed elements) between about 1 micrometer and 1000 micrometers. In an especially preferred embodiment, the posts have a micro-embossed element pitch of about 10 micrometers to 500 micrometers. In a more preferred embodiment, the posts have a micro-embossed element pitch of about 50 micrometers to 400 micrometers.

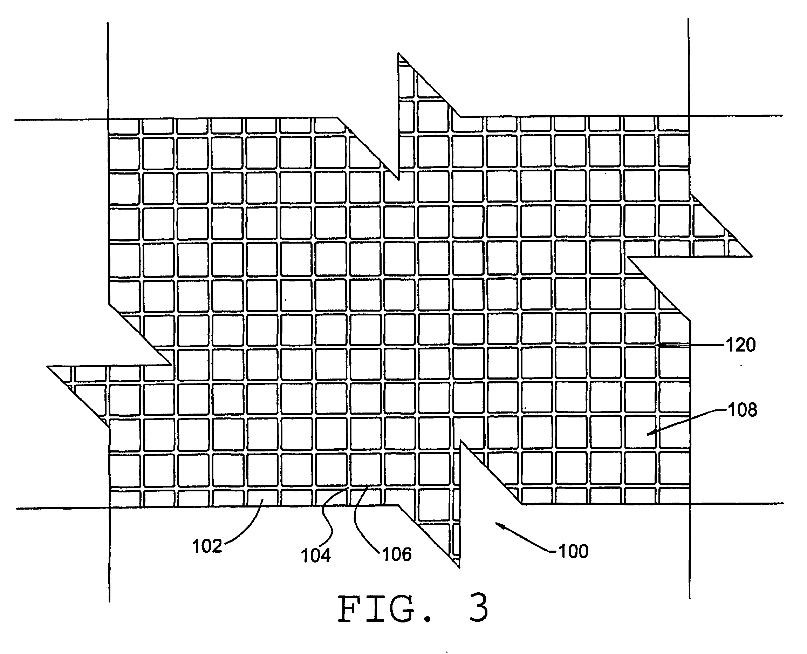

Figure 3 is a plan view of a micro-embossed sheet 100 which is not an embodiment of the invention. Micro-embossed sheet 100 includes a first surface 102 and a plurality of features 104 extending beyond first surface 102. It is understood that the use of micro-embossed features is exemplary here and that the features can also be particles such as beads. In the embodiment of Figure 3, features 104 comprise walls 106. Also in the embodiment of Figure 3, walls 106 define a plurality of cavities 108, and the top of walls 106 define a second surface 120.

The structure of the micro-embossed surface topography can be any structure that provides cavities that will each hold at least about 1 pL of ink. For example, the topographies for the cavities can range from generally cube shaped cavities with parallel vertical, planar walls, to cavities having a generally hemispherical shape, with any possible solid geometrical configuration of walls in between the two extremes. Additional examples include conical cavities with angular, planar walls; truncated pyramid cavities with angular, planar walls; and cube corner shaped cavities.

The pattern of the topography can be regular, random, or a combination of the two. "Regular" means that the embossing pattern is planned and reproducible regardless of the pattern of the embossing. "Random"means one or more features of the microembossed elements are intentionally and/or systematically varied in a nonregular manner. Examples of features that are varied include for example, micro-embossed element pitch, peak-to-valley distance, depth, height, wall angle, edge radius, and the like. Combination patterns may for example comprise patterns that are random over an area having a minimum radius of ten cavity widths from any point, but these random pattern's can be reproduced over larger distances within the overall pattern.

More than one drop of ink may be contained in a cavity because the mixing of the colors cyan, yellow, and magenta are required to create the infinite number of colors demanded in the inkjet industry. The volume of a cavity can range from about 1 to about 20,000 pL, preferably, from about 1 to about 10,000 pL, more preferably, from about 3 to about 10,000 pL, even more preferably, from about 30 to about 10,000 pL, and even more preferably from about 100 to about 10,000 pL. For applications in which desktop inkjet printers (typical drop size of 3-50 pL) will be used to generate the image, cavity volumes of from about 100 to about 3000 pL are preferred. For applications in which large format desktop inkjet printers (typical drop size of 10-200 pL) will be used to generate the image, cavity volumes of from about 3,000 to about 10,000 pL are preferred.

The cavities of the present invention may also be described in terms of aspect ratios. An "aspect ratio" is the ratio of the depth to the width of the cavity. Useful aspect ratios range from about 0.01 to about 2, preferably from about 0.05 to about 1, and more preferably from about 0.1 to about 0.5. The overall depth of the cavities depends on the shape, aspect ratio, and desired volume of the cavities. For a cubic-shaped cavity, the depth ranges from about 5 to about 100 micrometers. For a hemispherical-shaped cavity, the depth ranges from about 7 to about 100 micrometers. The depths of other geometrically shaped cavities reside in between these two extremes for a given volume.

In a preferred embodiment, micro-embossed sheet 100 comprises a thermoplastic material. Micro-embossed sheet 100 may comprise many thermoplastic and non-thermoplastic materials without deviating from the spirit and scope of the present invention. Examples of thermoplastic materials which may be suitable in some applications include polyethylene (PE), polypropylene (PP), poly(vinyl chloride) (PVC), polyethylene terephthalate (PET) polyethylene terephthalate glycol (PETG), acrylic, polyimide, polyamide, and thermoplastic polyurethane. Examples of non-thermoplastic materials which may be suitable in some applications include thermoset polyurethane.

Various techniques may be utilized to form micro-embossed sheet 100. Examples of techniques which may be suitable for some applications include thermoplastic extrusion, curable fluid coating methods, embossing thermoplastic layers which can also be cured, and contacting techniques. Examples of contacting techniques include casting, coating, and compressing techniques. More particularly, microembossing can be achieved by at least any of (1) casting a molten thermoplastic using a tool having a pattern, (2) coating of a fluid onto a tool having a pattern, solidifying the fluid, and removing the resulting micro-embossed solid, or (3) passing a thermoplastic film through a roll nip to compress against a tool having that micro-embossed pattern. Desired embossing topography can be formed in tools utilizing various techniques. The technique utilized in a particular application may be selected depending in part upon the tool material and features of the desired topography. Illustrative techniques include etching (e.g., via chemical etching, mechanical etching, or other ablative means such as laser ablation or reactive ion etching, etc.), photolithography, stereolithography, micromachining, knurling (e.g., cutting knurling or acid enhanced knurling), scoring or cutting, etc.

### Compression Method

One method which may be utilized to produce a micro-embossed imaging surface is a compression method utilizing a hot press. In this method heat and pressure are applied to the material to be microembossed. A hot press which may be suitable in some applications is commercially available from Wabash MPI of Wabash, Indiana, USA which identifies it as a model 20-122TM2WCB press. The pressure exerted in the press typically ranges from about 48 kPa to about 2400 kPa. The temperature of the press at the mold surface typically ranges from about 100°C to about 200°C and preferably from about 110 to about 150°C. The dwell time of pressure and temperature in the press typically ranges from about 1 to about 10 min. The pressure, temperature and dwell time used depend primarily on the particular material being micro-embossed. The process conditions should be sufficient to cause the material to flow and faithfully take the shape of the surface of the tool being used.

### Extrusion Method

A typical extrusion process for the present invention involves passing an extruded material or preformed substrate through a roll nip created by a chilled nip roll and a casting roll. The surface of the casting roll contains the inverse of the pattern which is to be micro-embossed. Representative but non-limiting conditions are outlined below. The temperature profile in the extruder can range from 100°C to 250 °C depending on the melt characteristics of the resin. The temperature at the die ranges from 150°C to 230°C depending on the melt strength of the resin. The pressure exerted in the nip can range from about 140 to about 1380 kPa and preferably from about 350 to about 550 kPa. The temperature of the nip roll can range from about 5 to about 150°C and preferably from about 10 to about 100 °C, and the temperature of the cast roll can range from about 25 to about 100 °C and preferably about 40 to about 60 °C. The speed of movement through the nip typically ranges from about 0.25 to about 10 m/min and preferably as fast as conditions allow.

Various extruders may be utilized without deviating from the spirit and scope of the present invention. For example, single screw or twin screw extruders may be used. Nonlimiting examples of equipment useful for this extrusion method include single screw extruders such as a 1¼ inch KILLION extruder, available from Killion Extruders, Inc. of Cedar Grove, New Jersey, USA, equipped with a gear pump such as a ZENITH gear pump, available from Parker Hannifin Corp., Zenith Pumps Division of Sanford, North Carolina, USA, to control flow rate; co-rotating twin screw extruders such as a 25mm BERSTORFF extruder available from Berstorff Corporation of Florence, Kentucky, USA; and counter-rotating twin screw extruders such as a 30mm LEISTRITZ extruder available from American Leistritz Extruder Corporation of Somerville, New Jersey, USA. Flow rate in the twin screw extruder can be controlled using weight loss feeders such as a K-TRON extruder, available from K-tron America of Pitman, New Jersey, USA, to feed the raw material into the extruder. A film die with adjustable slot is used to form a uniform film out of the extruder.

Calendering may be accomplished in a continuous process using a roll nip, as is well known in the film handling arts. In the present invention, a web having a suitable embossable thermoplastic exposed layer, and having sufficient thickness to receive the desired pattern is passed through a nip formed by two cylindrical rolls, one of which has an inverse image to the desired micro-embossed surface transferred into its surface. The embossable thermoplastic exposed layer must contact the engraved roll at the nip. Sufficient heating to temperatures of from 100°C up to 540 °C of the so that embossing may occur may be supplied web to reaching the nip by radiant heat sources (e.g., heat lamps, infrared heaters, etc.) and/or by use of heated rolls at the nip. A combination of heat and pressure at the nip (typically, 100 to 500 Ib/inch (1.8 kg/cm to 9 kg/cm)) is generally used in practice of the present invention.

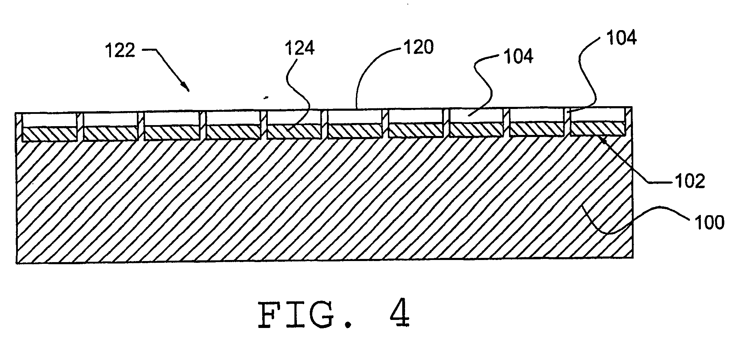

Figure 4 is a cross sectional view of an assembly 122 including micro-embossed sheet 100 of Figure 3. Micro-embossed sheet 100 includes a first surface 102 and a plurality of features 104 extending beyond first surface 102. Preferably, an image receptive material 124 is disposed proximate first surface 102 of the micro-embossed sheet 100. Image receptive material 124 may comprise many materials. Examples of materials which may be suitable in some applications include vinylpyrrolidone homopolymers and copolymers and substituted derivatives thereof; vinyl acetate copolymers (e.g., copolymers of vinylpyrrolidone and vinyl acetate; copolymers of vinyl acetate and acrylic acid, etc.) and hydrolyzed derivatives thereof; polyvinyl alcohol; acrylic acid homopolymers and copolymers; acrylamide homopolymers and copolymers; cellulosic polymers; styrene copolymers with allyl alcohol, acrylic acid and/or maleic acid or esters thereof; alkylene oxide polymers and copolymers; gelatins and modified gelatins; polysaccharides; and the like as disclosed in U.S. Patent Nos. 5,766,398; 4,775,594; 5,126,195; 5,198,306. Vinylpyrrolidone homopolymers and copolymers are preferred: Crosslinked vinylpyrrolidone homopolymers and copolymers are particularly preferred. Optionally, image receptive material 124 may include inorganic materials (e.g., alumina and/or silica particles). Additionally, blends consisting of any of the above mentioned materials may be used. Optionally, the image receptive material 124 may also include additives that provide a visual property to the image. Such additives include glitter, glass bubbles, pigments, mica, UV absorbers and stabilizers, etc.

In the embodiment of Figure 4, image receptive material 124 is disposed primarily between features 104. Features 104 define a second surface 120 of micro-embossed sheet 100. It is to be appreciated that Figure 4 is somewhat diagrammatic in nature. In Figure 4, image receptive material 124 is shown disposed on first surface 102. Embodiments of assembly 102 are possible in which image receptive material 124 is disposed on other surfaces of embossed sheet 100. Preferably, a majority of the ink receptive materials is proximate to first surface 102.

In a preferred embodiment, image receptive material 124 is adapted to receive an image comprising aqueous ink. In a particularly preferred embodiment, image receptive material 124 is adapted to receive an image comprised of aqueous ink adapted for use in an inkjet printer. An assembly including an embossed sheet and ink receptive material in accordance with the present invention may be utilized in conjunction with an inkjet printer to produce identification cards, driver's licenses, passports and the like. It is to be appreciated that the present invention is not limited to applications using ink. In some applications, receptive material may be adapted to receive other materials. Examples of materials which may be suitable in some applications include adhesives, biological fluids, chemical assay reagents, pharmaceuticals, particulate dispersions, waxes, and combinations thereof. An "image" as used herein means an application of ink and/or the material of the previous sentence to a surface.

Although aqueous inks are preferred, various other types of ink may be utilized in conjunction with the present invention. Examples of inks which may be suitable in some applications include: organic solvent-based inks, electrophotographic toners, thermal mass transfer toners, phase change inks, and radiation polymerizable inks. It should also be appreciated that inks utilizing many colorants may be utilized in conjunction with the present invention. Examples of colorants which may be suitable in some applications include dye based colorants and pigment based colorants.

A printed image in accordance with the present invention preferably includes one or more security indicia. Examples of security indicia which may be suitable in some applications include, a picture of a human face, a representation of a human fingerprint, a bar code, and a representation of a cardholder's signature. There are a number of applications in which security indicia is desirable. Examples include identification cards, driver's licenses, passports and the like. It should be appreciated that the present invention may also be utilized in applications not requiring security indicia (e.g., graphics applications).

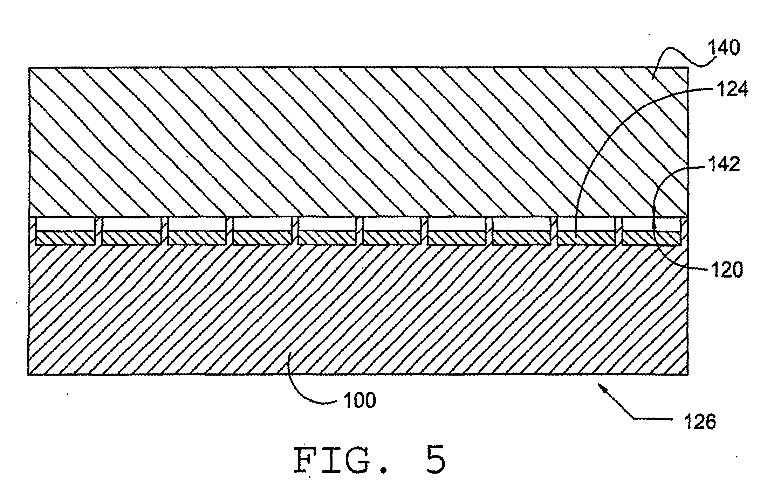

Figure 5 is a cross sectional view of a laminate assembly 126 including micro-embossed sheet 100 of Figure 4. In the embodiment of Figure 5, a first surface 142 of a second sheet 140 is bonded to second surface 120 of micro-embossed sheet 100. In one method in accordance with the present invention, an image may be printed upon image receptive material 124 prior to bonding, preferably by heat and/or pressure, second sheet 140 to micro-embossed sheet 100. Embodiments are possible in which micro-embossed sheet 100 is substantially optically transparent such that an image printed upon image receptive material 124 may be viewed through micro-embossed sheet 100. Embodiments of the present invention are also possible in which second sheet 140 is substantially optically transparent such that an image printed upon image receptive material 124 may be viewed through second sheet 140.

It should be appreciated that second sheet 140 may comprise many materials. Examples of materials which may be suitable in some applications include: polyethylene (PE), polypropylene (PP), poly(vinyl chloride) (PVC), poly(vinyl chloride)/polyvinyl acetate copolymers, polyethylene terephthalate (PET), polyethylene terephthalate glycol (PETG), poly(ethylene-co-acrylic acid), poly(ethylene-co-methacrylic acid), partially or fully neutralized poly(ethylene-co-methacrylic acid) and copolymers and blends thereof.

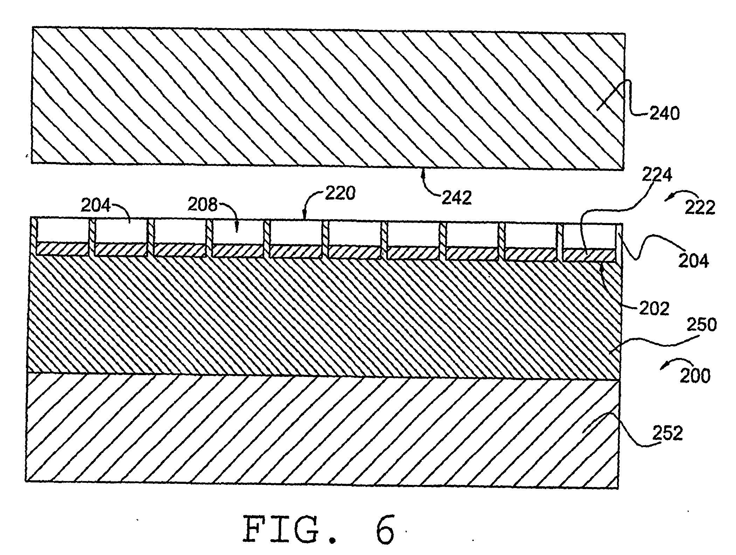

Figure 6 is an exploded cross sectional view of an assembly 222 which is not an embodiment of the present invention. Assembly 222 includes a micro-embossed sheet 200 including a micro-embossed layer 250 and a base layer 252. It is understood that the use of micro-embossing as features in assembly 222 is exemplary here and that the features can also be particles such as beads. Micro-embossed layer 250 of micro-embossed sheet 200 includes a first surface 202 and a plurality of micro-embossed elements 204 extending beyond first surface 202. An image receptive material 224 overlays first surface 202 of embossed layer 250 between micro-embossed elements 204. In the embodiment of Figure 6, micro-embossed elements 204 define a plurality of cavities 208 and a second surface 220 of micro-embossed sheet 200. Assembly 222 also includes a second sheet 240 having a first surface 242. First surface 242 of second sheet 240 is disposed proximate second surface 220 of micro-embossed sheet 200. Embodiment of micro-embossed sheet 200 are also possible in which cells 208 extend through micro-embossed layer 250.

In a preferred embodiment, image receptive material 224 is adapted to receive an image. In a presently more preferred embodiment, image receptive material 224 is adapted to receive an image comprising aqueous ink. A micro-embossed sheet and ink receptive material may be utilized in conjunction with an inkjet printer to produce identification cards, driver's licenses, passports and the like.

Image receptive material 224 may comprise many materials. Examples of materials which may be suitable in some applications include vinylpyrrolidone homopolymers and copolymers and substituted derivatives thereof; vinyl acetate copolymers (e.g., copolymers of vinylpyrrolidone and vinyl acetate; copolymers of vinyl acetate and acrylic acid, etc.) and hydrolyzed derivatives thereof; polyvinyl alcohol; acrylic acid homopolymers and copolymers; acrylamide homopolymers and copolymers; cellulosic polymers; styrene copolymers with allyl alcohol, acrylic acid and/or maleic acid or esters thereof, alkylene oxide polymers and copolymers; gelatins and modified gelatins; polysaccharides; and the like as disclosed in U.S. Patent Nos. 5,766,398; 4,775,594; 5,126,195; 5,198,306. Vinylpyrrolidone homopolymers and copolymers are preferred. Crosslinked vinylpyrrolidone-homopolymers and copolymers are particularly preferred. Optionally, image receptive material 224 may include inorganic materials (e.g., alumina and/or silica particles). Additionally, blends consisting of any of the above mentioned materials may be used. Optionally, the image receptive material 224 may also include additives that provide a visual property to the image. Such additives include glitter, glass bubbles, pigments, mica, UV absorbers and stabilizers, etc.

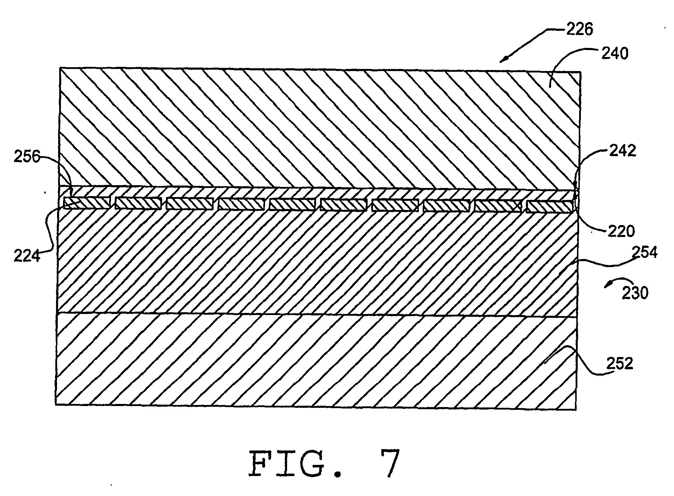

Figure 7 is a cross sectional view of a laminate assembly 226 including a first sheet 230 and a second sheet 240. First sheet 230 includes a first layer 254 and a base layer 252. In the embodiment of Figure 7, a first surface 242 of second sheet 240 is bonded to a second surface 220 defined by first layer 254 of first sheet 230. In a preferred embodiment, a first surface 242 of second sheet 240 is bonded to a second surface 220 defined by first layer 254 of first sheet 230 by a heat lamination process. In Figure 7, it may be appreciated that first sheet 230 defines a plurality of pockets 256. An image receptive material 224 is disposed within each pocket 256.

In one method in accordance with the present invention, an image may be printed upon image receptive material 224 prior to its encapsulation within pockets 256 defined by first layer 254 of first sheet 230. Embodiments are possible in which first layer 254 and base layer 252 of first sheet 230 are substantially optically transparent such that an image printed upon image receptive material 224 may be viewed through first sheet 230. Embodiments have also been envisioned in which first layer 254 of first sheet 230 and second sheet 240 are substantially optically transparent such that an image printed upon image receptive material 224 may be viewed through second sheet 240. Embodiments of laminate 226 are possible in which first sheet 230 does not include base layer 252.

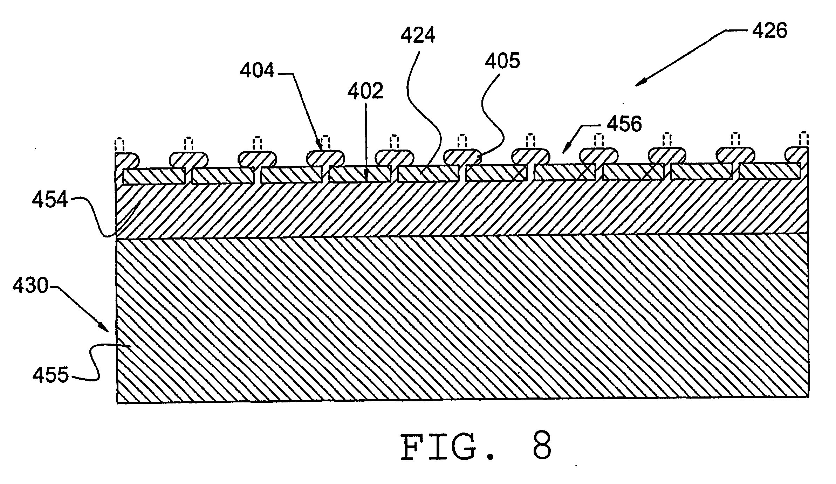

Figure 8 is a cross sectional view of a laminate assembly 426 in accordance with the present invention including a first sheet 430 comprising a first layer 454 and a base layer 455. In Figure 8, it may be appreciated that first sheet 430 includes a plurality of micro-embossed elements 404 extending beyond a first surface 402 of first layer 454 of first sheet 430. As always, features such as particles could be substituted for micro-embossed elements or features. Micro-embossed elements 404 define a plurality of pockets 456. An image receptive material 424 is disposed within each pocket 456.

In the embodiment of Figure 8, each projection includes a head 405. In one method in accordance with the present invention heads 405 are formed by applying heat and pressure to projections 404. In Figure 8, the general shape of each projection 404 prior to the formation of each head 405 is shown with dashed lines. An image may be printed upon image receptive material 424 before or after the formation of heads 405.

To produce the embodiment of the invention shown in Figure 8, it is preferable that the polymeric materials used in layer 454 satisfy at least the following two requirements: 1) The combination of their softening temperature and melt viscosity should be such that the materials themselves are able to flow under the lamination conditions. 2) The materials should be of sufficient abrasion resistance (under ambient conditions) to sufficiently protect the image. Not only does this allow the heads 405 to be formed, but it allows the image receiving layer and/or the pigment colorant particles to be at least partially embedded into layer 454 during the lamination process which can improve the overall durability of the image retaining laminate. Exemplary materials that seem to satisfy these requirements include polyethylene terephthalate glycol (PETG), poly(vinyl chloride) (PVC), plasticized versions of PVC, and PVC-vinyl acetate copolymers.

It,is preferable that the image receiving coating comprises organic or inorganic particles blended with a polymeric binder. Some examples of suitable organic particles include crosslinked PVP particles available from International Specialty Products, Inc. of Wayne, New Jersey, USA. Some examples of suitable inorganic particles include alumina particles available from Condea Vista Co., Houston, Texas, USA, and colloidal silica materials available from the Nalco Chemical Co., Chicago, Illinois, USA. It is preferable that the binder be a heat sealing polymer. Some examples of suitable heat sealing polymers are available from Air Products and Chemicals, Allentown, Pennsylvania, USA under the trade designation AIRFLEX and from the B.F. Goodrich Specialty Chemicals Co. of Cleveland, Ohio, USA under the trade designations HYCAR, VYCAR, and SANCURE. Moreover, the polymeric binder should have good adhesion to and compatibility with the polymeric substrate. As an example, SANCURE 1601 has good adhesion to PVC and PVC-co-vinyl acetate copolymers.

Embodiments of the present invention are possible in which first layer 454 of first sheet 430 is substantially optically transparent such that an image printed upon image receptive material 424 may be partially viewed through heads 405. Embodiments of the present invention have also been envisioned in which first layer 454 of first sheet 430 and base layer 455 of first sheet 430 are substantially optically transparent such that an image printed upon image receptive material 424 may be viewed through base layer 455 of first sheet 430. Embodiments of laminate 426 are possible in which first sheet 430 does not include base layer 455.

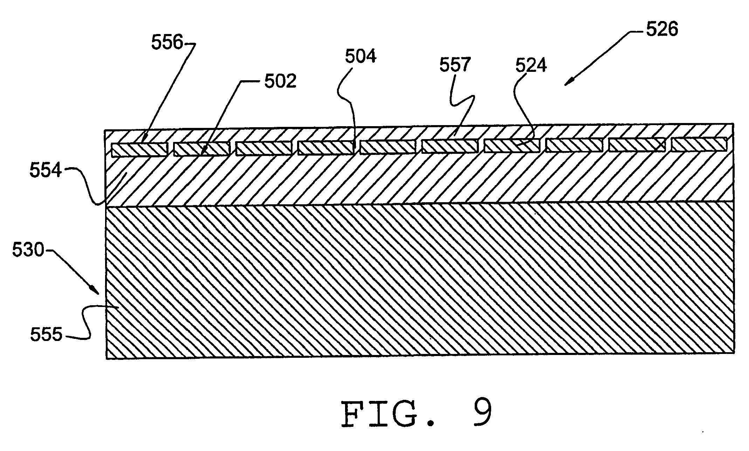

Figure 9 is a cross sectional view of a laminate assembly 526 in accordance with the present invention including a first sheet 530 comprising a first layer 554 and a base layer 555. In Figure 9, it may be appreciated that first layer 554 of first sheet 530 includes a cover 557 and a plurality of pockets 556. Each pocket is defined by a first surface 502, a plurality of projections 504, and a cover 557.

An image receptive material 524 is disposed within each pocket 556. In a preferred method in accordance with the present invention, an image is printed upon image receptive material 524 prior to the formation of covers 557. In this preferred method, covers 557 are formed by applying heat and pressure to projections 504.

Embodiments of the present invention are possible in which first layer 554 of first sheet 530 is substantially optically transparent such that an image printed upon image receptive material 524 may be viewed therethrough. Embodiments of the present invention have also been envisioned in which first layer 554 of first sheet 530 and base layer 555 of first sheet 530 are substantially optically transparent such that an image printed upon image receptive material 524 may be viewed through base layer 555 of first sheet 530. Embodiments of laminate 526 are possible in which first sheet 530 does not include base layer 555.

The materials requirements to produce the embodiment of the invention shown in Figure 9 are the same as those (given above) to produce Figure 8. An added requirement associated with Figure 9 is that the walls should be tall compared to the width of the cavity.

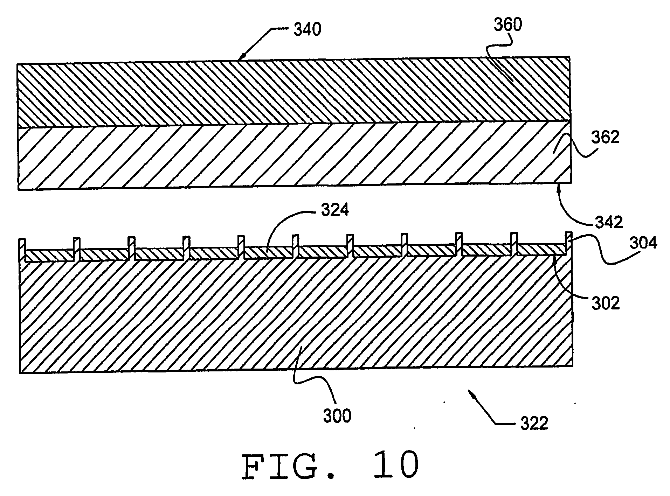

Figure 10 is an exploded cross sectional view of an assembly 322 including a micro-embossed sheet 300 and a second sheet 340. As above, a feature such as particles could be substituted for micro-embossed elements or features. Second sheet 340 of Figure 6 includes a backing layer 360, a tie layer 362, and a first surface 342 defined by tie layer 362. Micro-embossed sheet 300 includes a first surface 302 and a plurality of micro-embossed elements 304 extending beyond first surface 302. An image receptive material 324 overlays first surface 302 of micro-embossed sheet 300 between micro-embossed elements 304.

Tie layer 362 of second sheet 340 may comprise many materials without deviating from the spirit and scope of the present invention. Examples of materials which may be suitable in some applications include polyvinyl chloride, vinyl chloride-vinyl acetate copolymers, polyvinylidene chloride, polycarbodiimide, ethylene-vinyl acetate polymers and copolymers, acid or anhydride-modified polyethylene, propylene-and ethylene-vinyl acetate polymers and copolymers, maleic anhydrides grafted on polypropylenes, ethylene acrylic acid copolymers, polyurethanes, ethylene-vinyl alcohol copolymers, melamine acrylics, and the like.

Backing layer 360 of second sheet 340 may comprise many materials without deviating from the spirit and scope of the present invention. Examples of thermoplastic materials which may be suitable in some applications include polyethylene (PE), polypropylene (PP), poly(vinyl chloride) (PVC), polyethylene terephthalate (PET), polyethylene terephthalate glycol (PETG), acrylic, polyimide, polyamide, and thermoplastic polyurethane. Examples of non-thermoplastic materials which may be suitable in some applications include paper, card stock, and thermoset polyurethane.

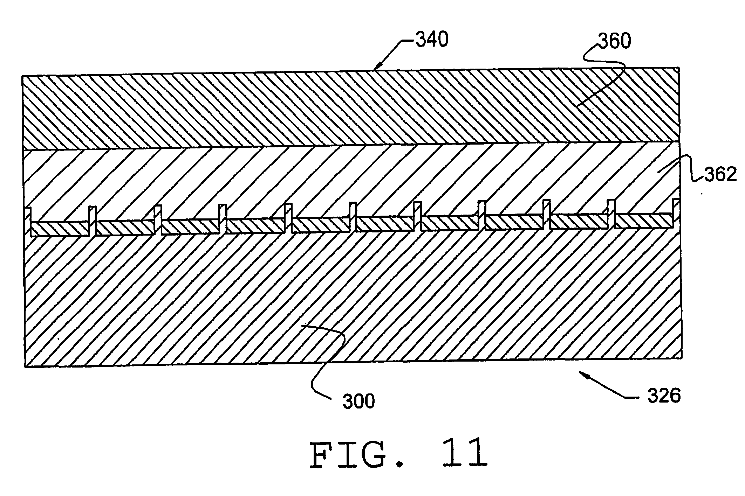

Figure 11 is a cross sectional view of a laminate 326 including micro-embossed sheet 300 of Figure 10. In the embodiment of Figure 11, tie layer 362 of second sheet 340 is bonded to micro-embossed sheet 300. As shown in Figure 11, a portion of the material comprising tie layer 362 is disposed between micro-embossed elements 304 of micro-embossed sheet 300.

In one method, an image may be printed upon image receptive material 324 prior to bonding. Embodiments are possible in which embossed sheet 300 is substantially optically transparent such that an image printed upon image receptive material 324 may be viewed through embossed sheet 300. Embodiments have also been envisioned in which tie layer 362 and backing layer 360 of second sheet 340 are substantially optically transparent such that an image printed upon image receptive material 324 may be viewed through second sheet 340.

The following examples 1 to 10 are not embodiments of the present invention whereas examples 11 to 16 disclose embodiments of the invention.

In the examples that follow, the term "parts" refers to parts by weight unless otherwise specified.

### Example 1

A piece of CONFIRM 1301 security laminate was embossed with a pattern. ("CONFIRM 1301" is a security laminate with an ethylene-acrylic acid adhesive, available from Minnesota Mining and Manufacturing (3M Company) of St. Paul, Minnesota, USA.) The pattern comprised a random arrangement of roughly hemispherical voids which were 25-30 micrometers deep and with diameters ranging from 50-85 micrometers, with most lying in the 70-80 micrometer range. The CONFIRM 1301 security laminate was pressed against an embossing tool containing the inverse of the desired pattern in a compression molding press.

The embossing tool was comprised of SILASTIC J. (SILASTIC J is a silicone elastomer available from Dow Corning Co. of Midland, Michigan, USA.) The press utilized was a Wabash model 20-122TM2WCB press from Wabash MPI of Wabash, IN. The temperatures of the platens were 140°C. A pressure of about 1.8 MPa was applied for about five minutes. The load was applied for an additional 5-10 minutes while the platens were cooled to about 75°C. The platens were then opened and the embossed film was removed from the embossing tool.

The embossed film was then imaged using an EPSON STYLUS COLOR 850 inkjet printer (available from U S Epson, Inc. of Torrance, California, USA) equipped with pigment/dye blend inkjet inks (cartridges ARC-S020108 (black) and ARC-S020089 (color) from MIS Associates Inc. of Lake Orion, Michigan, USA). The resulting image exhibited high color density and excellent line sharpness with no bleed or feathering between colors.

A piece of passport paper was placed on top of the image, and the construction was laminated using a TLC Model 6060P passport laminator with an interface temperature of about 120°C. After laminating, some ink feathering was observed, resulting in a slight degradation in the image quality.

An attempt was made to separate the embossed film from the passport paper at ambient conditions. The passport paper tore, indicating that the interfacial adhesion between the paper and the embossed film was greater than the internal strength of the paper.

### Example 2

A piece of CONFIRM 1301 security laminate was embossed with a pattern. ("CONFIRM 1301" is a security laminate with an ethylene-acrylic acid adhesive, available from 3M Company of St. Paul, Minnesota, USA.) The pattern comprised a random arrangement of roughly hemispherical voids which were 25-30 micrometers deep and with diameters ranging from 50-85 micrometers, with most lying in the 70-80 micrometer range. The CONFIRM 1301 security laminate was pressed against an embossing tool containing the inverse of the desired pattern in a compression molding press.

The embossing tool was comprised of SILASTIC J. (SILASTIC J is a silicone elastomer available from Dow Corning Co. of Midland, Michigan, USA.) The press utilized was a Wabash model 20-122TM2WCB press from Wabash MPI of Wabash, IN. The temperatures of the platens were 140°C. A pressure of about 1.8 MPa was applied for about five minutes. The load was applied for an additional 5-10 minutes while the platens were cooled to about 75°C. The platens were then opened and the embossed film was removed from the embossing tool.

A mixture of 20 parts POLYPLASDONE INF-10, 60 parts isopropyl alcohol, and 20 parts water was prepared. (POLYPLASDONE INF-10 is a trade designation for crosslinked poly(vinylpyrrolidone) particles available from International Specialty Products, Inc. of Wayne, New Jersey, USA.) The mixture was coated onto the embossed side of the film using a #10 Mayer rod (nominal wet thickness = 0.023 mm, R D Specialties of Webster, NY). The coating was then dried in an oven at 100°C.

The embossed film was then imaged using an EPSON STYLUS COLOR 850 inkjet printer (available from U S Epson, Inc. of Torrance, California, USA) equipped with pigment/dye blend inkjet inks (cartridges ARC-S020108 (black) and ARC-S020089 (color) from MIS Associates Inc. of Lake Orion, Michigan, USA). The resulting image exhibited high color density and excellent line sharpness with no bleed or feathering between colors.

A piece of passport paper was placed on top of the image, and the construction was laminated using a TLC Model 6060P passport laminator with an interface temperature of about 120°C. After laminating, the image quality remained unchanged.

An attempt was made to separate the embossed film from the passport paper at ambient conditions. The passport paper tore, indicating that the interfacial adhesion between the paper and the embossed film was greater than the internal strength of the paper.

### Example 3

A piece of CONFIRM 1301 security laminate was embossed with a pattern. The pattern comprised an arrangement of cylindrically shaped posts packed in a square array with a center-to-center spacing of 150 micrometers. The post diameter was 110 micrometers at its base and 92 micrometers at its top surface.

The CONFIRM 1301 security laminate was pressed against an embossing tool containing the inverse of the desired pattern in a compression molding press. The embossing tool was comprised of SILASTIC J. (SILASTIC J is a silicone elastomer available from Dow Corning Co. of Midland, Michigan, USA.) The press utilized was a Wabash model 20-122TM2WCB press from Wabash MPI of Wabash, IN. The temperatures of the platens were 140°C. A pressure of about 1.8 MPa was applied for about five minutes. The load was applied for an additional 5-10 minutes while the platens were cooled to about 75°C. The platens were then opened and the embossed film was removed from the embossing tool.

The embossed film was then imaged using an EPSON STYLUS COLOR 850 inkjet printer (available from U S Epson, Inc. of Torrance, California, USA) equipped with pigment/dye blend inkjet inks (cartridges ARC-S020108 (black) and ARC-S020089 (color) from MIS Associates Inc. of Lake Orion, Michigan, USA). Some slight feathering of the inks was observed.

A piece of passport paper was placed on top of the image, and the construction was laminated using a TLC Model 6060P passport laminator with an interface temperature of about 120°C. After laminating, additional ink feathering was observed, resulting in a slight degradation in the image quality.

An attempt was made to separate the embossed film from the passport paper at ambient conditions. The passport paper tore, indicating that the interfacial adhesion between the paper and the embossed film was greater than the internal strength of the paper.

### Example 4

A piece of CONFIRM 1301 security laminate was embossed with a pattern. ("CONFIRM 1301" is a security laminate with an ethylene-acrylic acid adhesive, available from 3M Company of St. Paul, Minnesota, USA.) The pattern comprised an arrangement cylindrically shaped posts packed in a square array with a center-to-center spacing of 150 micrometers. The post diameter was 110 micrometers at its base and 92 micrometers at its top surface.

The CONFIRM 1301 security laminate was pressed against an embossing tool containing the inverse of the desired pattern in a compression molding press. The embossing tool was comprised of SILASTIC J. (SILASTIC J is a silicone elastomer available from Dow Corning Co. of Midland, Michigan, USA.) The press utilized was a Wabash model 20-122TM2WCB press from Wabash MPI of Wabash, IN. The temperatures of the platens were 140°C. A pressure of about 1.8 MPa was applied for about five minutes. The load was applied for an additional 5-10 minutes while the platens were cooled to about 75 °C. The platens were then opened and the embossed film was removed from the embossing tool.

A mixture of 20 parts POLYPLASDONE INF-10, 60 parts isopropyl alcohol, and 20 parts water was prepared. (POLYPLASDONE INF-10 is a trade designation for crosslinked poly(vinylpyrrolidone) particles available from International Specialty Products, Inc. of Wayne, New Jersey, USA) The mixture was coated onto the embossed side of the film using a #14 Mayer rod (nominal wet thickness = 0.032 mm, R D Specialties of Webster, NY). The coating was then dried in an oven at 100°C.

The embossed film was then imaged using an EPSON STYLUS COLOR 850 inkjet printer (available from U S Epson, Inc. of Torrance, California, USA) equipped with pigment/dye blend inkjet inks (cartridges ARC-S020108 (black) and ARC-S020089 (color) from MIS Associates Inc. of Lake Orion, Michigan, USA). The resulting image exhibited high color density and excellent line sharpness with no bleed or feathering between colors.

A piece of passport paper was placed on top of the image, and the construction was laminated using a TLC Model 6060P passport laminator with an interface temperature of about 120°C. After laminating, the image quality remained unchanged.

Upon attempting to separate the laminate from the image at ambient conditions, the passport paper and CONFIRM 1301 could be carefully separated using moderate force with very little of the paper tearing.

### Example 5

A piece of CONFIRM 1301 security laminate was embossed with a pattern. The pattern comprised an array of 25 micrometer deep square wells that are 340 micrometers wide and surrounded by walls which are 15 micrometers thick at their base and 5 micrometers thick at their top surface.

The CONFIRM 1301 security laminate was pressed against an embossing tool containing the inverse of the desired pattern in a compression molding press. The embossing tool was comprised of SILASTIC J. (SILASTIC J is a silicone elastomer available from Dow Corning Co. of Midland, Michigan, USA.) The press utilized was a Wabash model 20-122TM2WCB press from Wabash MPI of Wabash, IN. The temperatures of the platens were 140°C. A pressure of about 1.8 MPa was applied for about five minutes. The load was applied for an additional 5-10 minutes while the platens were cooled to about 75°C. The platens were then opened and the embossed film was removed from the embossing tool.

The embossed film was then imaged using an EPSON STYLUS COLOR 850 inkjet printer (available from U S Epson, Inc. of Torrance, California, USA) equipped with pigment/dye blend inkjet inks (cartridges ARC-S020108 (black) and ARC-S020089 (color) from MIS Associates Inc. of Lake Orion, Michigan, USA). Some slight feathering of the inks was observed.

A piece of passport paper was placed on top of the image, and the construction was laminated using a TLC Model 6060P passport laminator with an interface temperature of about 120°C. After laminating, additional ink feathering was observed, resulting in a slight degradation in the image quality.

An attempt was made to separate the embossed film from the passport paper at ambient conditions. The passport paper tore, indicating that the interfacial adhesion between the paper and the embossed film was greater than the internal strength of the paper.

### Example 6

A piece of CONFIRM 1301 security laminate was embossed with a pattern. ("CONFIRM 1301" is a security laminate with an ethylene-acrylic acid adhesive, available from 3M Company of St. Paul, Minnesota, USA.) The pattern comprised an array of 25 micrometer deep square wells that are 340 micrometers wide and surrounded by walls which are 15 micrometers thick at their base and 5 micrometers thick at their top surface.

The CONFIRM 1301 security laminate was pressed against an embossing tool containing the inverse of the desired pattern in a compression molding press. The embossing tool was comprised of SILASTIC J. (SILASTIC J is a silicone elastomer available from Dow Corning Co. of Midland, Michigan, USA.) The press utilized was a Wabash model 20-122TM2WCB press from Wabash MPI of Wabash, IN. The temperatures of the platens were 140°C. A pressure of about 1.8 MPa was applied for about five minutes. The load was applied for an additional 5-10 minutes while the platens were cooled to about 75°C. The platens were then opened and the embossed film was removed from the embossing tool.

A mixture of 20 parts POLYPLASDONE INF-10, 60 parts isopropyl alcohol, and 20 parts water was prepared. The mixture was coated onto the embossed side of the film using a #14 Mayer rod (nominal wet thickness = 0.032 mm, R D Specialties of Webster, NY). The coating was then dried in an oven at 100°C.

The embossed film was then imaged using an EPSON STYLUS COLOR 850 inkjet printer (available from U S Epson, Inc. of Torrance, California, USA) equipped with pigment/dye blend inkjet inks (cartridges ARC-S020108 (black) and ARC-S020089 (color) from MIS Associates Inc. of Lake Orion, Michigan, USA). The resulting image exhibited high color density and excellent line sharpness with no bleed or feathering between colors.

A piece of passport paper was placed on top of the image, and the construction was laminated using a TLC Model 6060P passport laminator with an interface temperature of about 120°C. After laminating, the image quality remained unchanged.

Upon attempting to separate the laminate at ambient conditions, the passport paper and CONFIRM 1301 could be carefully separated using moderate force with very little of the paper tearing.

### Example 7

A piece of CONFIRM 1301 security laminate was embossed with a pattern. The pattern comprised an array of 25 micrometer deep square wells that are 125 micrometers wide and surrounded by walls which are 25 micrometers thick at their base and 16 micrometers thick at their top surface. The CONFIRM 1301 security laminate was pressed against an embossing tool containing the inverse of the desired pattern in a compression molding press. The embossing tool was comprised of SILASTIC J. The press utilized was a Wabash model 20-122TM2WCB press from Wabash MPI of Wabash, IN. The temperatures of the platens were 140°C. A pressure of about 1.8 MPa was applied for about five minutes. The load was applied for an additional 5-10 minutes while the platens were cooled to about 75°C. The platens were then opened and the embossed film was removed from the embossing tool.

The embossed film was then imaged using an EPSON STYLUS COLOR 850 inkjet printer (available from U S Epson, Inc. of Torrance, California, USA) equipped with pigment/dye blend inkjet inks (cartridges ARC-S020108 (black) and ARC-S020089 (color) from MIS Associates Inc. of Lake Orion, Michigan, USA). The resulting image exhibited high color density and excellent line sharpness with no bleed or feathering between colors.

A piece of passport paper was placed on top of the image, and the construction was laminated using a TLC Model 6060P passport laminator with an interface temperature of about 120°C. After laminating, a small amount of ink feathering was observed, resulting in a very slight degradation in the image quality.

An attempt was made to separate the embossed film from the passport paper at ambient conditions. The passport paper tore, indicating that the interfacial adhesion between the paper and the embossed film was greater than the internal strength of the paper.

### Example 8

A piece of CONFIRM 1301 security laminate was embossed with a pattern. The pattern comprised an array of 25 micrometer deep square wells that are 125 micrometers wide and surrounded by walls which are 25 micrometers thick at their base and 16 micrometers thick at their top surface. The CONFIRM 1301 security laminate was pressed against an embossing tool containing the inverse of the desired pattern in a compression molding press. The embossing tool was comprised of SILASTIC J. The press utilized was a Wabash model 20-122TM2WCB press from Wabash MPI of Wabash, IN. The temperatures of the platens were 140°C. A pressure of about 1.8 MPa was applied for about five minutes. The load was applied for an additional 5-10 minutes while the platens were cooled to about 75°C. The platens were then opened and the embossed film was removed from the embossing tool.

A mixture of 20 parts POLYPLASDONE INF-10, 60 parts isopropyl alcohol, and 20 parts water was prepared. The mixture was coated onto the embossed side of the film using a #14 Mayer rod (nominal wet thickness = 0.032 mm, R D Specialties of Webster, NY). The coating was then dried in an oven at 100°C.

The embossed film was then imaged using an EPSON STYLUS COLOR 850 inkjet printer (available from U S Epson, Inc. of Torrance, California, USA) equipped with pigment/dye blend inkjet inks (cartridges ARC-S020108 (black) and ARC-S020089 (color) from MIS Associates Inc. of Lake Orion, Michigan, USA). The resulting image exhibited high color density and excellent line sharpness with no bleed or feathering between colors.

A piece of passport paper was placed on top of the image, and the construction was laminated using a TLC Model 6060P passport laminator with an interface temperature of about 120°C. After laminating, the image quality remained unchanged.

An attempt was made to separate the embossed film from the passport paper at ambient conditions. The passport paper tore, indicating that the interfacial adhesion between the paper and the embossed film was greater than the internal strength of the paper.

### Example 9

A piece of CONFIRM 1301 security laminate was embossed with a pattern. ("CONFIRM 1301" is a security laminate with an ethylene-acrylic acid adhesive, available from 3M Company of St. Paul, Minnesota, USA.) The pattern comprised an arrangement of cylindrically shaped posts packed in a square array with a center-to-center spacing of 150 micrometers. The post diameter was 110 micrometers at its base and 92 micrometers at its top surface.

The CONFIRM 1301 security laminate was pressed against an embossing tool containing the inverse of the desired pattern in a compression molding press. The embossing tool was comprised of SILASTIC J. The press utilized was a Wabash model 20-122TM2WCB press from Wabash MPI of Wabash, IN. The temperatures of the platens were 140°C. A pressure of about 1.8 MPa was applied for about five minutes. The load was applied for an additional 5-10 minutes while the platens were cooled to about 75°C. The platens were then opened and the embossed film was removed from the embossing tool.

A first mixture comprising 20 parts Airflex 426 binder (on a solids basis) and 80 parts water (including water from the binder emulsion) was prepared.

A second mixture comprising 10 parts FK310 silica, 18.9 parts isopropyl alcohol, 84.4 parts water, 33.3 parts the first mixture and 0.33 parts ZONYL FSN was prepared. This ink receptor composition was coated using a #10 Mayer rod (nominal wet thickness = 0.023 mm) onto the embossed side of the CONFIRM 1301. The coating was dried in an oven at 100°C.

FK310 is a trade designation for precipitated silica particles available from Degussa Corp. of Wayne, New Jersey, USA AIRFLEX 426 is a trade designation for ethylene-vinyl acetate latex binder emulsion, available from Air Products and Chemicals Co. of Allentown, Pennsylvania, USA. ZONYL FSN is a trade designation for a fluorinated surfactant, available from E. I. duPont de Nemours Co. of Wilmington, DE.

The embossed film was then imaged using an EPSON STYLUS COLOR 850 inkjet printer (available from U S Epson, Inc. of Torrance, California, USA) equipped with pigment/dye blend inkjet inks (cartridges ARC-S020108 (black) and ARC-S020089 (color) from MIS Associates Inc. of Lake Orion, Michigan, USA). The resulting image exhibited high color density and excellent line sharpness with no bleed or feathering between colors.

A piece of passport paper was placed on top of the image, and the construction was laminated using a TLC Model 6060P passport laminator with an interface temperature of about 120°C. After laminating, the image quality remained unchanged.

Significant force was required to separate the passport paper and CONFIRM 1301 at ambient conditions.

### Example 10

A mixture comprising 13 parts FK310 silica, 25 parts isopropyl alcohol, 49 parts water, and 13 parts AIRFLEX 426 was prepared. This ink receptor composition was coated using a #22 Mayer rod (nominal wet thickness = 0.050 mm) onto the adhesive receptive side of CONFIRM 1301 laminate that had not been embossed with any pattern (i.e., "flat", as received), followed by drying in an oven at 70°C. The film was then embossed on the coated side utilizing a Wabash model 20-122TM2WCB press.

The platen temperatures were 140°C and a pressure of 0.9MPa was applied for five minutes. The load was applied for an additional 5-10 minutes while the platens were cooled to about 75°C. The platens were then opened and the embossed film was removed from the embossing tool. The resulting embossed pattern comprised an array of 44 micrometer deep square wells that are 250 micrometers wide and surrounded by walls which are 12 micrometers thick at their base and 33 micrometers thick at their top surface.

The embossed film was then imaged using an EPSON STYLUS COLOR 850 inkjet printer (available from U S Epson, Inc. of Torrance, California, USA) equipped with pigment/dye blend inkjet inks (cartridges ARC-S020108 (black) and ARC-S020089 (color) from MIS Associates Inc. of Lake Orion, Michigan, USA). The resulting image exhibited high color density and excellent line sharpness with no bleed or feathering between colors.

A piece of passport paper was placed on top of the image, and the construction was laminated using a TLC Model 6060P passport laminator with an interface temperature of about 120°C. After laminating, the image quality remained unchanged.

An attempt was made to separate the embossed film from the passport paper at ambient conditions. The passport paper tore, indicating that the interfacial adhesion between the paper and the embossed film was greater than the internal strength of the paper.

### Example 11

A mixture was prepared comprising 9.3 parts poly(vinylpyrrolidone) (Mw~1,300,000, available from Aldrich, St. Louis. Missouri, USA), 6.4 parts MICHEM PRIME 4983R, 84 parts water (excluding the water in the MICHEM PRIME 4983 R), and 0.3 parts SILWET L-7607. MICHEM PRIME 4983R is a trade designation for a polyethylene-co-acrylic acid dispersion available from Michelman, Inc. of Cincinnati, Ohio, USA. SILWET L-7607 is a polyalkyleneoxide modified polydimethylsiloxane surfactant, available from OSi Specialties, a subsidiary of Witco Corp. of Friendly, WV. The composition was coated using a #22 Mayer rod (nominal wet thickness = 0.050 mm) onto a piece of 0.178 mm thick clear poly(vinyl chloride) film, (available from Klockner-Pentaplast of America, Inc. of Gordonsville, Virginia, USA.) and dried in a convection oven at 70°C.

The film was then embossed on the coated side utilizing a compression molding apparatus (Model S400R-X91-X-X-X4-D from the Rucker Phi Co.). The temperatures of the platens were 170°C and a pressure of about 4.8 MPa was applied for about five minutes. The load was applied for an additional 5-10 minutes while the platens were cooled to about 38°C. The platens were then opened and the embossed film was removed from the embossing tool. The resulting emboss comprised an array of 25 micrometer deep square wells that are 125 micrometers wide and surrounded by walls which are 25 micrometers thick at their base and 16 micrometers thick at their top surface.

This film was then printed on the embossed side using a HP 870C inkjet printer equipped with aqueous inks. HP 870c is a trade designation for a desktop inkjet printer available from the Hewlett-Packard Corp. of Palo Alto, California. The resulting image exhibited high color density and excellent line sharpness with no bleed or feathering between colors.

An opaque backing material was prepared by using a #22 Mayer rod (wet thickness = 0.050 mm) to coat SANCURE 1601 onto a piece of backing film. (SANCURE 1601 is a trade designation for a waterborne dispersion of an aliphatic urethane polymer, available from B.F. Goodrich Specialty Chemicals of Cleveland, Ohio, USA.) The backing film comprised a 0.56 mm thick film of EASTAR 6763 (available from Eastman Chemical of Knoxville, Tennessee, USA) filled with 4% by volume titanium oxide particles. The coating was dried in a convection oven at 70°C. The coated surface of the backing film was contacted with the imaged surface of the PVC film and the construction was laminated using a Model 5560-SS1 roll laminator (available from the Thermal Laminating Company, Evanston, Illinois with the first set of pressure rollers operating at 135°C and the second set of rollers set to 163°C. After laminating, the image quality remained unchanged.

To assess the interlayer adhesion, a piece of SCOTCH BRAND 471 tape (3M Company of St. Paul, Minnesota, USA) was applied to and slowly removed from the exterior surface of the PVC film. The multilayer construction remained intact as the tape was peeled from the laminate, indicating good adhesion.

### Example 12

A piece of 0.178 mm thick clear poly(vinyl chloride) film, (available from Klockner-Pentaplast of America, Inc. of Gordonsville, Virginia, USA) was embossed utilizing a compression molding apparatus (Model S400R-X91-X-X-X4-D from the Rucker Phi Co.). The temperatures of the platens were 170°C and a pressure of about 4.8 MPa was applied for about five minutes. The load was applied for an additional 5-10 minutes while the platens were cooled to about 38°C. The platens were then opened and the embossed film was removed from the embossing tool. The resulting emboss comprised an array of 25 micrometer deep square wells that are 125 micrometers wide and surrounded by walls which are 25 micrometers thick at their base and 16 micrometers thick at their top surface.

A first mixture was prepared comprising 9.3 parts poly(vinylpyrrolidone) (Mw~1,300,000, available from Aldrich, St. Louis. Missouri, USA), 6.4 parts MICHEM PRIME 4983R, 84 parts water (excluding the water in the MICHEM PRIME 4983 R), and 0.3 parts SILWET L-7607. A second mixture was then prepared comprising 87 parts of the first mixture and 13 parts water. The second mixture was coated onto the embossed PVC film using a #14 Mayer rod (nominal wet thickness = 0.032 mm). The coating was then dried in a convection oven at 70°C.

This film was then printed on the embossed side using a HP 870C inkjet printer equipped with aqueous inks. The resulting image exhibited high color density and excellent line sharpness with no bleed or feathering between colors.

An opaque backing material was prepared by using a #22 Mayer rod (wet thickness = 0.050 mm) to coat SANCURE 1601 onto a piece of PETG backing film (0.56 mm thick film of EASTAR 6763 filled with 4% by volume titanium oxide particles), followed by drying at 70°C. The coated surface of the opaque backing was contacted with the imaged surface of the PVC film and the construction was laminated using a Model 5560-SS1 roll laminator (available from the Thermal Laminating Company, Evanston, Illinois with the first set of pressure rollers operating at 135°C and the second set of rollers set to 163°C. After laminating, the image quality remained unchanged.

To assess the interlayer adhesion of the construction, a piece of SCOTCH BRAND 471 tape was applied to and slowly removed from the exterior surface of the PVC film. The multilayer construction remained intact as the tape was peeled from the laminate, indicating good adhesion.

### Example 13

A mixture was prepared comprising 10 parts of a poly(vinyl chloride)-co-vinyl acetate copolymer (10 % vinyl acetate substitution, available from Aldrich, St. Louis, Missouri, USA) 85 parts Dimethyl Sulfoxide, 4 parts PYCAL 94, and 1 part SILWET L-7607. The mixture was coated onto a piece of unembossed (i.e. "flat', as received) PVC film (0.178 mm thick clear poly(vinyl chloride) film available from Klockner-Pentaplast of America, Inc. of Gordonsville, Virginia, USA.) using a #36 Mayer Rod (wet thickness = 0.082 mm) and dried in a convection oven at 90°C. To increase the thickness of the coating, an additional layer of the mixture was applied to the freshly coated PVC film using a #36 Mayer rod and dried at 90°C. The coated surface of this film was then embossed utilizing a compression molding apparatus (Model S400R-X91-X-X-X4-D from the Rucker Phi Co.). The temperatures of the platens were 170°C and a pressure of about 2.2 MPa was applied for about five minutes. The load was applied for an additional 5-10 minutes while the platens were cooled to about 38°C. The resulting emboss comprised an array of 25 micrometer deep square wells that are 125 micrometers wide and surrounded by walls which are 25 micrometers thick at their base and 16 micrometers thick at their top surface.

A second mixture was prepared comprising 9.3 parts poly(vinylpyrrolidone) (Mw~1,300,000, available from Aldrich, St. Louis. Missouri, USA), 6.4 parts MICHEM PRIME 4983R, 84 parts water (excluding the water in the MICHEM PRIME 4983 R), 0.3 parts SILWET L-7607.

A mixture comprising by weight 87 parts of the second mixture and 13 parts of water was coated onto the previously embossed and coated PVC film using a #14 Mayer rod (nominal wet thickness = 0.032 mm). The second coating was then dried in a convection oven at 70°C.

This film was then printed on the embossed side using a HP 870C inkjet printer equipped with aqueous inks. The resulting image exhibited high color density and excellent line sharpness with no bleed or feathering between colors.

A piece of PETG film was placed on top of the image and the construction was laminated using a Model 5560-SS1 roll laminator (available from the Thermal Laminating Company, Evanston, Illinois with the first set of pressure rollers operating at 135°C and the second set of rollers set to 163°C. After laminating, the image quality remained unchanged.

Upon attempting to separate the PVC film from the PETG backing, the PVC film tore, indicating that the interfacial adhesion between the backing, coating and laminate was greater than the internal strength of the PVC film.

### Example 14

A piece of 0.178 mm thick clear poly(vinyl chloride) film, (available from Klockner-Pentaplast of America, Inc. of Gordonsville, Virginia, USA.) was embossed utilizing a compression molding apparatus (Model S400R-X91-X-X-X4-D from the Rucker Phi Co.). The temperatures of the platens were 170°C and a pressure of about 4.8 MPa was applied for about five minutes. The load was applied for an additional 5-10 minutes while the platens were cooled to about 38°C. The platens were then opened and the embossed film was removed from the embossing tool. The resulting emboss comprised an array of 25 micrometer deep square wells that are 125 micrometers wide and surrounded by walls which are 25 micrometers thick at their base and 16 micrometers thick at their top surface.

A first mixture was prepared comprising 9.3 parts poly(vinylpyrrolidone) (Mw~1,300,000, available from Aldrich, St. Louis. Missouri, USA), 6.4 parts MICHEM PRIME 4983R, 84 parts water (excluding the water in the MICHEM PRIME 4983 R), and 0.3 parts SILWET L-7607. A second mixture was then prepared comprising 87 parts of the first mixture and 13 parts water. The second mixture was coated onto the embossed PVC film using a #14 Mayer rod (nominal wet thickness = 0.050 mm). The coating was then dried in a convection oven at 70°C.

This film was then printed on the embossed side using a HP 870C inkjet printer equipped with aqueous inks. The resulting image exhibited high color density and excellent line sharpness with no bleed or feathering between colors.

A piece of PETG backing film was placed on top of the image and the construction was laminated using a Model 5560-SS1 roll laminator (available from the Thermal Laminating Company, Evanston, Illinois with the first set of pressure rollers operating at 135°C and the second set of rollers set to 163°C. After laminating, the image quality remained unchanged.

To assess the interlayer adhesion, a piece of SCOTCH BRAND 471 tape was applied to and slowly removed from the exterior surface of the PVC film. The multilayer construction remained intact as the tape was peeled away from the laminate, indicating good adhesion.

### Example 15

An X-PVP dispersion was prepared comprising 10 parts POLYPLASDONE INF-10, 45 parts isopropyl alcohol, and 45 parts water. A diluted SANCURE dispersion was prepared comprising 2 parts SANCURE 1601, 1 part isopropyl alcohol and 1 part water. An X-PVP/SANCURE dispersion was prepared comprising 1 part of the diluted SANCURE dispersion and 5.25 parts of the X-PVP dispersion. The X-PVP/SANCURE dispersion was mixed with poly(vinyl chloride-co-vinyl acetate) resin (available from Aldrich Chemical Co., St. Louis, Missouri, USA (catalog #18.297-4) in a ratio of about 5.95 parts X-PVP/SANCURE dispersion to 1 part of the poly(vinyl chloride-co-vinyl acetate) resin.

This ink receptor composition was coated onto a piece of PETG film (0.56 mm thick film of EASTAR 6763 filled with 4% by volume titanium oxide particles). Three pieces of SCOTCH MAGIC TAPE 810 (available from the 3M Company, St. Paul, Minnesota, USA) were applied to each edge of the PETG film to serve as spacers and the coating was applied using a #60 Mayer rod. The coating was then dried in a convection oven at 70°C.

The coated surface of the PETG film was then printed using a SuperImage MediaPrinter 700 (available from SuperImage, Mission Viejo, California, USA) equipped with aqueous inks. The resulting image exhibited high color density and excellent line sharpness with no bleed or feathering between the colors.

The imaged surface of the PETG film was contacted with a piece of PVC film (0.178 mm thick clear poly(vinyl chloride) film available from Klockner-Pentaplast of America, Inc. of Gordonsville, Virginia, USA) and the construction was laminated using a Model 5560-SS1 roll laminator (available from the Thermal Laminating Company, Evanston, Illinois with the first set of pressure rollers operating at 135 °C and the second set of rollers set to 163°C. After laminating, the image quality remained unchanged.

The interlayer adhesion was assessed by measuring the peel adhesion. Peel adhesion was measured using Instron testing machine (Instron Corp. Park Ridge. Illinois, USA) model 1122 equipped with a 500 N load cell. Strips of samples measuring about 25 mm wide and 100 mm in length was cut from the ID card (longer dimension) . The laminate and the substrate were each clamped to the upper and the lower crosshead of Instron via a filament tape (SCOTCH BRAND 890 available from 3M Company, St. Paul, Minnesota, USA). The crosshead speed was 6 inches/minute. The experiment was repeated in triplicate. The average force required to separate the laminate from the backing was 0.945 Newtons/millimeter.

### Example 16

A mixture was prepared comprising 18 parts of a poly(vinyl chloride)-co-vinyl acetate copolymer (14 % vinyl acetate substitution, available from Aldrich, St. Louis, Missouri, USA) and 72 parts acetone. The mixture was coated onto a piece of unembossed (i.e. "flat', as received) PVC film (0.178 mm thick clear poly(vinyl chloride) film available from Klockner-Pentaplast of America, Inc. of Gordonsville, Virginia, USA.) using a #36 Mayer Rod (wet thickness =0.082 mm) and dried in a convection oven at 70°C. The coated surface of this film was then embossed utilizing a compression molding apparatus (Model S400R-X91-X-X-X4-D from the Rucker Phi Co.). The temperatures of the platens were 170°C and a pressure of about 2.2 MPa was applied for about five minutes. The load was applied for an additional 5-10 minutes while the platens were cooled to about 38°C. The resulting emboss comprised an array of about 40 micrometer deep square wells that are about 125 micrometers wide and surrounded by walls which are about 31 micrometers thick at their base and about 20 micrometers thick at their top surface.

A second mixture was prepared comprising 10 parts AIRFLEX 426, 10 parts isopropyl alcohol, 99 parts water, 64 parts NALCO 1056, 1.7 parts ZONYL FSN. AIRFLEX 426 is a trade designation for ethylene-vinyl acetate latex binder emulsion, available from Air Products and Chemicals Co. of Allentown, Pennsylvania, USA. ZONYL FSN is a trade designation for a fluorinated surfactant, available from E. I. duPont de Nemours Co. of Wilmington, DE. NALCO 1056 is a trade designation for a colloidal silica dispersion, available from Nalco Chemical Co., Chicago, IL.

This ink receptor composition was applied to the embossed surface of the PVC film using a #10 Mayer rod (nominal wet thickness = 0.023 mm). The coating was then dried in a convection oven at 70°C.

The embossed surface was then imaged using a HP 1120C printer equipped with pigmented inks. HP 1120C is a trade designation for a desktop inkjet printer available from the Hewlett-Packard Corp. of Palo Alto, California. The resulting image exhibited high color density and excellent line sharpness with no bleed or feathering between colors. A silicone coated polyethylene terephthalate (PET) film was contacted with the image surface. A combination of heat and pressure were applied to this construction using a Model 5560-SS1 laminator (available from the Thermal Laminating Company, Evanston, IL) with the first set of pressure rollers operating at 135°C and the second set of rollers set to 163°C. After laminating, the silicone coated PET film was easily separated from the imaged surface of the film. The imaged surface of the film was rubbed with light hand pressure using a moist paper towel and the moist paper towel remained substantially free of colorant.

### Comparative Example 1

A mixture was prepared comprising 20 parts POLYPLASDONE INF-10, 60 parts isopropyl alcohol, and 20 parts water. The mixture was coated onto the adhesive receptive side of a piece of CONFIRM 1301 laminate that had not been embossed with any pattern (i.e., "flat", as received), using a #14 Mayer rod (nominal wet thickness = 0.032 mm). The coating was then dried in an oven at 100°C.

This unembossed sheet was then imaged using an EPSON STYLUS COLOR 850 inkjet printer (available from U S Epson, Inc. of Torrance, California, USA) equipped with pigment/dye blend inkjet inks (cartridges ARC-S020108 (black) and ARC-S020089 (color) from MIS Associates Inc. of Lake Orion, Michigan, USA). Some slight feathering of the inks was observed. A piece of passport paper was placed on top of the image, and the construction was laminated using a TLC Model 6060P passport laminator with an interface temperature of about 120°C. After laminating, the image quality remained unchanged.

Upon attempting to separate the laminate at ambient conditions, the passport paper and CONFIRM 1301 could be carefully separated using moderate force without tearing the paper.

### Comparative Example 2

A mixture was prepared comprising 9.3 parts poly(vinylpyrrolidone) (Mw~1,300,000, available from Aldrich, St. Louis. Missouri, USA), 6.4 parts MICHEM PRIME 4983R, 84 parts water (excluding the water in the MICHEM PRIME 4983 R), and 0.3 parts SILWET L-7607. The mixture was coated onto the adhesive receptive side of a piece of PVC film (0.178 mm thick clear poly(vinyl chloride) film available from Klockner-Pentaplast of America, Inc. of Gordonsville, Virginia, USA) which had not been embossed with any pattern (i.e., "flat", as received), using a #22 Mayer rod (nominal wet thickness = 0.050 mm). The coating was then dried in an oven at 70°C.

This unembossed sheet was then printed on the coated side using a HP 870C inkjet printer equipped with aqueous inks. The resulting image exhibited high color density and excellent line sharpness with no bleed or feathering between colors.

An opaque backing material was prepared by using a #22 Mayer rod (wet thickness = 0.050 mm) to coat SANCURE 1601 onto a piece of PETG film (0.56 mm thick film of EASTAR 6763 filled with 4% by volume titanium oxide particles). The coating was dried in an oven at 70°C. The coated surface of the PETG film was contacted with the imaged surface of the PVC film and the construction was laminated using a Model 5560-SS1 roll laminator (available from the Thermal Laminating Company, Evanston, Illinois with the first set of pressure rollers operating at 135°C and the second set of rollers set to 163°C. After laminating, the image quality remained unchanged.

To assess the interlayer adhesion, a piece of SCOTCH BRAND 471 tape was applied to and slowly removed from the exterior surface of the PVC film. The PVC film separated from the backing material as the tape was removed, indicating poor interlayer adhesion.

### Comparative Example 3

An X-PVP dispersion was prepared comprising 10 parts POLYPLASDONE INF-10, 45 parts isopropyl alcohol, and 45 parts water. A diluted SANCURE dispersion was prepared comprising 2 parts SANCURE 1601, 1 part isopropyl alcohol and 1 part water. An X-PVP/SANCURE dispersion was prepared comprising 1 part of the diluted SANCURE dispersion and 5.25 parts of the X-PVP dispersion.

This ink receptor composition was coated onto a piece of PETG film (0.56 mm thick film of EASTAR 6763 filled with 4% by volume titanium oxide particles). Three pieces of SCOTCH MAGIC TAPE 810 (available from the 3M Company, St. Paul, Minnesota, USA) were applied to each edge of the PETG film to serve as spacers and the coating was applied using a #60 Mayer rod. The coating was then dried in a convection oven at 70°C.

The coated surface of the PETG film was then printed using a SuperImage MediaPrinter 700 (available from SuperImage, Mission Viejo, California, USA) equipped with aqueous inks. The resulting image exhibited high color density and excellent line sharpness with no bleed or feathering between the colors.

The imaged surface of the PETG film was contacted with a piece of PVC film (0.178 mm thick clear poly(vinyl chloride) film available from Klockner-Pentaplast of America, Inc. of Gordonsville, Virginia, USA) and the construction was laminated using a Model 5560-SS1 roll laminator (available from the Thermal Laminating Company, Evanston, Illinois with the first set of pressure rollers operating at 135 °C and the second set of rollers set to 163 °C. After laminating, the image quality remained unchanged.

The interlayer adhesion was assessed by measuring the peel adhesion. Peel adhesion was measured using Instron testing machine (Instron Corp. Park Ridge. Illinois, USA) model 1122 equipped with a 500 N load cell. Strips of samples measuring about 25 mm wide and 100 mm in length was cut from the ID card (longer dimension) . The laminate and the substrate were each clamped to the upper and the lower crosshead of Instron via a filament tape (SCOTCH BRAND 890 available from 3M Company, St. Paul, Minnesota, USA). The crosshead speed was 6 inches/minute. The experiment was repeated in triplicate. The average force that was required to separate the laminate from the backing was 0.670 Newtons/millimeter.

Having thus described the preferred embodiments of the present invention, those of skill in the art will readily appreciate that yet other embodiments may be made and used within the scope of the claims hereto attached. Numerous advantages of the invention covered by this document have been set forth in the foregoing description. It will be understood, however, that this disclosure is, in many respects, only illustrative. Changes may be made in details, particularly in matters of shape, size, and arrangement of parts without exceeding the scope of the invention. The invention's scope is, of course, defined in the language in which the appended claims are expressed.

## Claims

1. A method of forming an image retaining media comprising the steps of:
providing a substrate comprising a first surface and one or more projections extending beyond the first surface;
each projection having a proximal end fixed proximate the first surface, and a distal end defining a second surface of the substrate;
applying an image to the first surface; and
applying pressure and/or heat to the distal end of each projection to cause a region of each projection proximate the distal end of each projection to become generally enlarged.

2. The method of claim 1, further including the step of depositing a layer of image receptive material on the first surface of the substrate.

## Patentansprüche

1. Verfahren zur Bildung eines Bildspeichermediums, welches folgende Schritte aufweist:
Bereitstellen eines Substrats, welches eine erste Oberfläche und einen oder mehrere, sich über die erste Oberfläche hinaus erstreckende Vorsprünge aufweist;
wobei jeder Vorsprung ein in der Nähe der ersten Oberfläche fixiertes nahes Ende und ein entferntes Ende aufweist, welches eine zweite Oberfläche des Substrats definiert;
Aufbringen eines Bildes auf die erste Oberfläche; und
Aufbringen von Druck und/oder Wärme auf das entfernte Ende jedes Vorsprungs, wodurch eine allgemeine Vergrößerung einer Region jedes Vorsprungs bewirkt wird, der in der Nähe des entfernten Endes jedes Vorsprungs liegt.

2. Verfahren nach Anspruch 1, welches ferner den Schritt des Aufbringens einer Schicht aus Bildempfangsmaterial auf der ersten Oberfläche des Substrates aufweist.

## Revendications

1. Procédé de fabrication d'un milieu de réception d'image comprenant les étapes :
de fourniture d'un substrat comprenant une première surface et une ou plusieurs saillies s'étendant au-delà de la première surface ;
chaque saillie ayant une extrémité proximale fixée à proximité de la première surface, et une extrémité distale définissant une deuxième surface du substrat ;
d'application d'une image sur la première surface ; et
d'application d'une pression et/ou de chaleur à l'extrémité distale de chaque saillie pour faire qu'une région de chaque saillie proche de l'extrémité distale de chaque saillie soit généralement agrandie.

2. Procédé selon la revendication 1, comprenant en outre l'étape de dépôt d'une couche de matériau de réception d'image sur la première surface du substrat.
